# FASCICULE DE BREVET EUROPEEN

(11) **EP 1 285 356 B1**
(45) Date de publication et mention de la délivrance du brevet: **22.05.2013**
(21) Numéro de dépôt: 01936589.9
(22) Date de dépôt: 18.05.2001
(51) Int. Cl.: G06F 17/21, G06F 17/22

(54) **PROCEDE POUR LA CONSTITUTION D'UNE BASE DE DONNEES RELATIVE AUX INFORMATIONS CONTENUES DANS UN DOCUMENT**
VERFAHREN ZUM HERSTELLEN EINER DATENBANK MIT BEZUG AUF INFORMATIONEN ÜBER DOKUMENT-INHALTE
METHOD FOR CONSTITUTING A DATABASE CONCERNING DATA CONTAINED IN A DOCUMENT

(30) Priorité: 18.05.2000 FR 0006343; 19.06.2000 FR 0007781
(43) Date de publication de la demande: 26.02.2003
(73) Titulaire: ANDROMAQUE PREPRESSE, 67100 Strasbourg (FR)
(72) Inventeur: ROUDOT, Denis, F-67000 Strasbourg (FR)
(74) Mandataire: Nuss, Pierre
(86) Numéro de dépôt international: PCT/FR2001/001542
(87) Numéro de publication internationale: WO 2001/088749

(56) Documents cités:
- WO-A-97/25679
- US-A- 5 495 565
- US-A- 5 649 192
- US-A- 5 890 176
- US-A- 6 154 756
- KARL ABERER: 'Structured Documents and their Manipulation in Database Systems', [en ligne] 1999, DARMSTADT, GERMANY, Extrait de l'Internet: <URL:http://Isirpeople.epfl.ch./aberer/Talk s/sgml.pdf(1999)>

## Description

L'invention concerne un procédé pour la constitution d'un moyen de mémorisation contenant des informations relatives au contenant et au contenu d'un ensemble de blocs, correspondant chacun à un texte ou à une image, et dont l'agencement approprié permet de définir la composition d'une ou des pages d'un document dont la mise en page est assurée par un moyen de traitement approprié associé à un moyen de stockage au niveau duquel sont enregistrées, bloc par bloc et pour chaque bloc, d'une part, toutes lesdites informations relatives au contenant et au contenu de l'ensemble de ces blocs et, d'autre part, le contenu de ces derniers, chaque bloc étant associé à un identifiant permettant son identification au niveau dudit moyen de stockage.

La présente invention concerne le domaine de l'édition de documents constitués par une ou plusieurs pages, notamment des documents d'information ou à caractère commercial.

L'on connaît, d'ores et déjà, des documents correspondant à la description ci dessus et adoptant, par exemple, la forme d'une revue, d'un catalogue, d'un journal ou d'une simple feuille imprimée.

Un tel document est, usuellement, imprimé avant d'être mis à la disposition du public.

Cependant, avant de procéder à une telle impression, il est nécessaire de concevoir un tel document, ce dernier étant généralement amené à subir un certain nombre de modifications avant de se retrouver sous la forme définitive dans laquelle il est diffusé.

A ce propos, il convient d'observer que la conception d'un tel document consiste à définir une ou plusieurs pages constituées par un agencement approprié d'un ensemble de blocs correspondant, chacun, à un texte ou à une image, chacun de ces blocs contenant, d'une part, toutes les informations relatives à son contenant et à son contenu et, d'autre part, son contenu.

L'agencement de ces blocs est assuré au travers d'un moyen de traitement (tel qu'un logiciel) pour la mise en page apte à assurer la création d'un moyen de stockage au niveau duquel sont enregistrées, bloc par bloc et pour chaque bloc, d'une part, toutes les informations relatives au contenant et au contenu de l'ensemble de ces blocs et, d'autre part, le contenu de ces derniers.

C'est, en fait, à partir d'un tel moyen de stockage que l'on va réaliser l'impression du document.

On observera que, entre la première version et la version définitive apte à être imprimée, ce moyen de stockage peut subir un certain nombre de modifications. Ces dernières consistent, par exemple, en un déplacement, une suppression, un remplacement d'un bloc ou encore en une modification du contenu d'un tel bloc.

De telles modifications s'avèrent, en fait, particulièrement complexes à effectuer car ces blocs sont susceptibles d'adopter une forme différente et sont associés à différents types de moyens de traitement (logiciels) qui, entre eux et avec le logiciel de mise en page, présentent souvent des difficultés de communication.

Afin de pallier ces difficultés, il a été imaginé de constituer un moyen de mémorisation, tel qu'une base de données, regroupant toutes les informations concernant les blocs et présentes au niveau du moyen de stockage. Une telle démarche nécessite, en fait, d'effectuer un balisage de chaque information disponible au niveau du moyen de stockage avant de reporter les informations, comprises entre les balises, dans le moyen de mémorisation. Ce procédé présente un certain nombre d'inconvénients liés, notamment, au fait que le balisage doit être, d'une part, particulièrement précis et, d'autre part, spécifique à chaque type d'information. De plus, les informations enregistrées dans le moyen de mémorisation occupent une place importante et sont difficilement modifiables. En outre, les informations relatives aux blocs doivent, impérativement, être complétées par des informations complémentaires, d'une part, indispensables pour la restitution de l'information relative aux blocs et, d'autre part, spécifiques à chaque logiciel de mise en page.

Les informations relatives au contenant sont habituelles au document SGML, par exemple HTML. Voir
http://Isirpeople.epfl.ch/aberer/Talks/sgml.pdf (1999) Structured Documents and their Manipulation in Database Systems; Karl Aberer et al GMD IPSI 1999

La présente invention se veut à même d'apporter une solution aux problèmes rencontrés pour les procédés de constitution de base de données connus dans l'état de la technique.

A cet effet, la présente invention concerne un procédé pour la constitution d'un moyen de mémorisation contenant des informations relatives au contenant et au contenu d'un ensemble de blocs, correspondant chacun à un texte ou à une image, et dont l'agencement approprié permet de définir la composition d'une ou des pages d'un document dont la mise en page est assurée par un moyen de traitement approprié associé à un moyen de stockage au niveau duquel sont enregistrées, bloc par bloc et pour chaque bloc, d'une part, toutes lesdites informations relatives au contenant et au contenu de l'ensemble de ces blocs et, d'autre part, le contenu de ces derniers, chaque bloc étant associé à un identifiant permettant son identification au niveau dudit moyen de stockage, caractérisé par la fait que :
- l'on recueille, au niveau dudit moyen de stockage, bloc après bloc et pour chaque bloc, les informations relatives au contenant et au contenu de chaque bloc ;
- l'on associe l'identifiant de chaque bloc ainsi que les informations, relatives au contenant et au contenu de chacun de ces blocs, à un emplacement dans un moyen de mémorisation tel qu'une base de données ;
- l'on recueille, au niveau dudit moyen de stockage, bloc après bloc et pour chaque bloc correspondant à un texte, le contenu de ce bloc texte et l'on crée, pour chacun de ces blocs texte, un fichier texte dans lequel on reporte le contenu de ce bloc texte ;
- l'on associe l'identifiant de chaque bloc correspondant à un texte ainsi que chaque fichier texte correspondant à un bloc texte, à un emplacement dans la base de donnée.

Selon une autre caractéristique, l'on recueille, au niveau dudit moyen de stockage, différents types d'informations unitaires correspondant aux informations relatives au contenant et au contenu de chaque bloc, et l'on associe l'identifiant de chaque bloc ainsi que chaque information unitaire, correspondant à chaque type d'information relative à ce bloc, à un emplacement dans le moyen de mémorisation.

Une caractéristique additionnelle concerne le fait que l'on crée un tableau dans lequel on reporte, bloc après bloc, pour chaque bloc et en fonction de l'identifiant de ce dernier, selon le cas, les informations relatives au contenant et au contenu de chaque bloc et/ou les informations unitaires, ceci par type d'information unitaire.

Selon une autre caractéristique, l'on limite, au moins en partie, l'accès, selon le cas, soit aux informations relatives au contenant et au contenu de chaque bloc, soit à une partie au moins des informations unitaires.

Une caractéristique complémentaire concerne le fait que l'on associe l'identifiant de chaque bloc correspondant à un texte ainsi que, selon le cas, les informations, relatives au contenant et au contenu de ce bloc texte, et/ou les informations unitaires relatives à ce bloc texte, au fichier texte dans lequel figure le contenu de ce bloc texte.

Selon une autre caractéristique, l'on génère le fichier texte destiné à contenir le contenu de ce bloc texte, selon le cas, lors du report, dans le tableau, des informations relatives au contenant et au contenu d'un bloc correspondant à un texte, ou lors de l'association de ces informations à un emplacement du moyen de mémorisation.

Une caractéristique additionnelle consiste en ce que, lorsque l'on reporte, dans un fichier texte, le contenu d'un bloc correspondant à un texte, l'on constitue, dans ce fichier texte, au moins un pavé défini par deux parties dont la première partie est constituée par au moins un code de base tandis que la seconde partie est constituée par au moins un caractère alphanumérique, d'une part, associé aux codes de base et, d'autre part, correspondant au texte, associé audit bloc-texte, et apparaissant au niveau de la page du document.

En fait, l'on associe le ou les caractères alphanumériques de la seconde partie du pavé, voire le ou les codes de base de la première partie du pavé, à un emplacement dans ledit moyen de mémorisation

Selon une autre caractéristique, lorsque la première partie d'un pavé est constituée par une succession de codes de base, on définit un code additionnel de base correspondant à cette succession de codes de base et on associe cette succession de code de base et/ou ledit code additionnel de base à un emplacement de la base de donnée.

A partir du fichier texte, l'on crée un fichier texte complémentaire dans lequel on remplace la succession de codes de base correspondant à la première partie du ou des pavés par le code additionnel de base correspondant et l'on associe le fichier texte complémentaire ainsi créé à un emplacement dans le moyen de mémorisation.

Selon une caractéristique additionnelle, pour chaque fichier texte, l'on interprète le ou les codes de base constituant la première partie du ou des pavés de ces fichiers texte et l'on associe les codes interprétés ainsi que les caractères alphanumériques constituant la seconde partie du ou des pavés de ces fichiers texte à un emplacement dans le moyen de mémorisation.

Lorsque la première partie d'un pavé est constituée par une succession de codes de base, l'on interprète ces codes de base, l'on constitue une succession de codes interprétés et l'on définit un code additionnel interprété correspondant à cette succession de codes interprétés et/ou on associe cette succession de codes interprétés et/ou ledit code additionnel interprété à un emplacement de la base de donnée.

A partir du fichier texte, l'on crée un fichier texte additionnel dans lequel on remplace la succession de codes de base correspondant à la première partie du ou des pavés, selon le cas, par la succession de codes interprétés correspondant ou par le code additionnel interprété correspondant et que l'on associe ce fichier texte additionnel ainsi créé à un emplacement dans le moyen de mémorisation.

Selon une autre caractéristique de la présente invention, lorsqu'on l'on reporte, dans un fichier texte, le contenu d'un bloc correspondant à un texte, l'on intègre, dans ce fichier texte, au moins un code spécifique de base défini par une succession de codes de base et correspondant, par exemple, à un style spécifique de présentation d'une partie au moins du texte correspondant audit bloc, ledit code spécifique de base étant associé à la première partie d'au moins un pavé que comporte ledit fichier texte.

Une autre caractéristique concerne le fait que l'on associe ledit code spécifique de base et/ou la succession de codes de base correspondant à ce code spécifique de base à un emplacement dans le moyen de mémorisation.

L'on interprète les codes de base constituant la succession de codes de base définissant le code spécifique de base, l'on définit un code spécifique interprété constitué par la succession des codes interprétés et l'on associe cette succession de codes interprétés et/ou ledit code spécifique interprété à un emplacement du moyen de mémorisation.

A partir du fichier texte, l'on crée un fichier texte supplémentaire dans lequel on remplace le code spécifique de base par le code spécifique interprété correspondant et l'on associe ce fichier texte supplémentaire ainsi créé à un emplacement dans le moyen de mémorisation.

Une caractéristique complémentaire concerne le fait que l'on limite, au moins en partie, l'accès, selon le cas, à une partie au moins desdits fichiers texte et/ou au(x) caractère(s) alphanumérique (s) et/ou à une partie au moins des codes, notamment associés à un emplacement de la base de donnée.

Selon une caractéristique additionnelle, lors de la création d'un fichier texte, correspondant à un bloc texte, l'on crée une balise, spécifique à ce fichier texte et associée à ce dernier, et l'on associe cette balise à un emplacement dans le moyen de mémorisation.

Lors de la création de cette balise, l'on associe cette dernière à une information relative à la page dans laquelle figure le bloc texte correspondant au fichier texte associé à ladite balise et l'on associe cette information à un emplacement dans le moyen de mémorisation.

L'on crée, pour au moins une page du document et par page, un fichier balisé dans lequel on reporte toutes les balises correspondant aux blocs texte de cette page et on associé ce fichier balisé à un emplacement dans le moyen de mémorisation.

En fait, l'on associe, à ce fichier balisé, un fichier balisé secondaire au niveau duquel apparaît, apte à être au moins en partie modifié, le contenu des blocs texte correspondant à une page et l'on associe ce fichier balisé secondaire à un emplacement du moyen de mémorisation.

Selon une autre caractéristique, l'on limite, au moins en partie, l'accès, selon le cas, auxdites balises et/ou au fichiers balisés et/ou au contenu des fichiers balisés secondaires.

Selon une caractéristique additionnelle, l'on associe l'identifiant de chaque bloc correspondant à une image ainsi que les informations, relatives au contenant et au contenu de ce bloc, au contenu dudit bloc image.

L'on associe l'identifiant de chaque bloc correspondant à une image ainsi que le contenu de ce bloc à un emplacement dans le moyen de mémorisation.

Selon une autre caractéristique, l'on détecte, au niveau du moyen de stockage, des informations relatives aux différentes couleurs apparaissant dans les blocs, l'on associe une composition de couleurs primaires à chaque information correspondant à une couleur donnée, et l'on associe cette composition et/ou l'information relative à cette couleur donnée à un emplacement dans le moyen de mémorisation.

L'on crée un tableau dans lequel on reporte, en fonction de chaque information relative à une couleur donnée, la composition de couleurs primaires correspondant à cette information.

Une caractéristique complémentaire consiste en ce que l'on limite, au moins en partie, l'accès, selon le cas, au contenu dudit bloc image et/ou à la composition de couleurs primaires et/ou à l'information correspondant à une couleur donnée détectée au niveau du moyen de stockage.

Ce procédé est, au moins en partie, mis en oeuvre par l'intermédiaire d'au moins un moyen de traitement tel qu'un logiciel.

Les avantages de la présente invention consistent en ce que le procédé permet de constituer un moyen de mémorisation, tel qu'une base de données, contenant toutes les informations relatives au contenant et au contenu de chacun des blocs entrant dans la composition d'un document. Ce procédé permet, également, d'associer le contenu de ces blocs audit moyen de mémorisation.

En fait, ce moyen de mémorisation peut, avantageusement, être conçu de telle sorte qu'il est possible d'utiliser les informations qu'il contient pour, d'une part, intervenir sur les blocs d'un document et, d'autre part, assurer la gestion de ce dernier et, d'autre part encore, reconstituer un tel document ou constituer un nouveau document.

Selon un autre avantage, il est possible de définir des fichiers auxquels sont associés tous les blocs, notamment les blocs texte, correspondant à une même page. Le contenu de ces fichiers est susceptible d'être modifié, les modifications apportées se traduisant par des modifications apparaissant au niveau des blocs correspondant de cette page.

Un autre avantage consiste en ce qu'il est possible de limiter, au moins en partie, l'accès au contenu des blocs, aux informations qu'ils contiennent, voire aux blocs eux-même, ceci en vue d'éviter à un opérateur de procéder, notamment par inadvertance, à une modification non souhaitée.

Ainsi, au travers d'un tel mode de réalisation, seules les personnes dûment autorisées sont susceptibles d'accéder et/ou de modifier le contenu et/ou les informations relatives au contenant et au contenu desdits blocs.

Ce procédé permet, avantageusement, de récolter, au niveau d'un moyen de stockage généré par un moyen de traitement (logiciel) pour la mise en page, des informations codifiées de manière spécifique par ledit moyen de traitement et de rendre ces informations, d'une part, disponibles au niveau d'un moyen de mémorisation, tel qu'une base de données, et, d'autre part, aptes à être modifiées.

L'invention est exposée plus en détail dans la description qui va suivre se rapportant à des modes de réalisation donnés à titre d'exemples et illustrés dans les figures des dessins en annexe dans lesquels :
- la figure 1 est une vue schématisée, d'une part, d'un document résultant de l'agencement approprié de blocs et, d'autre part, du moyen de stockage correspondant à ce document et à partir duquel est généré ce dernier ;
- la figure 2 correspond à une vue schématisée et synoptique de l'application du procédé selon l'invention à un moyen de stockage défini par un ensemble de blocs ;
- la figure 3 correspond à une vue schématisée et en détail d'un bloc texte à partir duquel on crée un fichier texte ;
- les figures 4, 5 et 6 correspondent à des vues schématisées et en détail d' un fichier texte à partir duquel on crée un fichier texte complémentaire, un fichier texte additionnel et un fichier texte supplémentaire.

La présente invention concerne le domaine de l'édition de documents constitués par une ou plusieurs pages, notamment un tract, un journal, une revue, un catalogue ou autre.

Il convient d'observer que, dans la suite de la description, il sera essentiellement fait référence à un document 1 constitué par une seule page 2 sachant que l'application du procédé selon l'invention n'est nullement limitée à un document de ce type, celui-ci pouvant, bien évidemment, comporter plusieurs pages, éventuellement rassemblées dans un ou plusieurs cahiers.

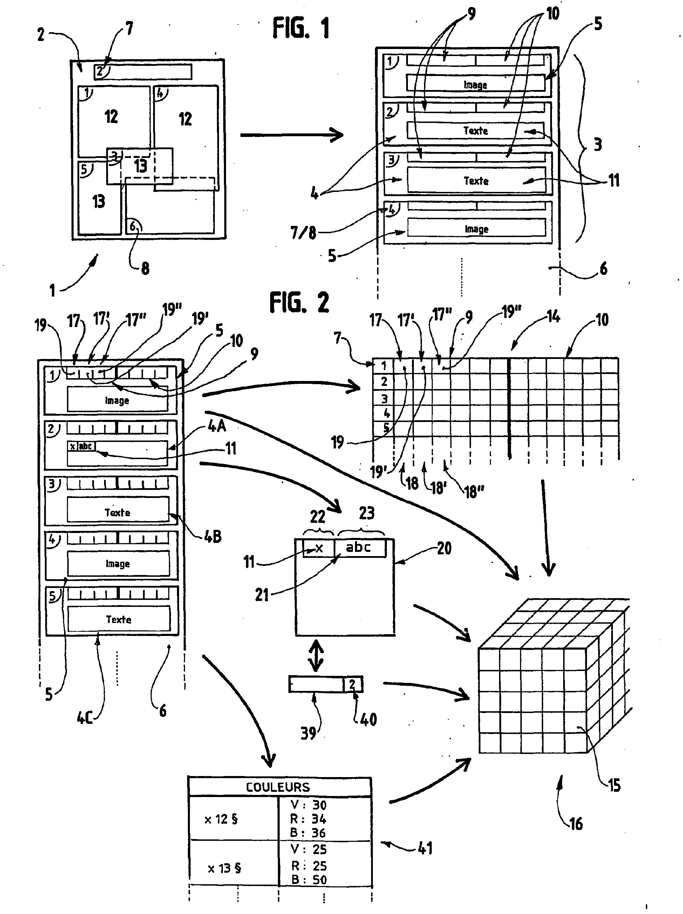

Il a été représenté figure 1 un document 1 constitué par une seule page 2 dont le contenu est défini par un agencement approprié d'un ensemble 3 de blocs 4, 5. Ces derniers sont constitués, notamment, par des blocs 4 correspondant à un texte et par des blocs 5 correspondant à une image.

A ce propos, on observera que l'agencement de ces blocs 4, 5 est réalisé au travers d'un moyen de traitement pour la mise en page apte, en outre, à assurer la création d'un moyen de stockage 6 au niveau duquel est regroupé l'ensemble 3 des blocs 4, 5 du document 1, ce dernier pouvant être composé d'une ou de plusieurs pages.

Un tel moyen de stockage 6 est, par exemple, constitué par un fichier informatique apte à être transmis à un imprimeur et contenant toutes les données susceptibles de permettre l'impression du document 1.

En fait, ce moyen de stockage 6 contient l'ensemble 3 des blocs 4, 5 disposés, comme visible figures 1 et 2, les uns à la suite des autres. A ce propos, il convient d'observer que la disposition de ces blocs 4, 5 au niveau dudit moyen de stockage 6 peut se faire dans l'ordre d'apparition de ces blocs 4, 5 au niveau du document 1 sachant qu'une telle disposition, d'une part, n'est aucunement obligatoire et, d'autre part, peut se faire de manière aléatoire.

On observera que chaque bloc 4, 5 est associé à un identifiant 7 permettant l'identification dudit bloc 4, 5, notamment au niveau du moyen de stockage 6. Un tel identifiant 7 est constitué, par exemple, par un numéro 8 correspondant, de préférence, à l'ordre d'apparition dudit bloc 4, 5 dans le document 1 ou dans le moyen de stockage 6.

Chaque bloc 4, 5 contient des informations 9 relatives au contenant dudit bloc 4, 5, de telles informations 9 correspondant, par exemple, à la position du bloc, à son orientation, à sa forme, à sa profondeur au niveau de la page 2, au numéro de la page ou du cahier de page où ledit bloc apparaît au niveau du document 1, au type de contenu du bloc (image, texte) ...

Chaque bloc 4, 5 contient, encore, des informations 10 relatives au contenu 11 dudit bloc 4, 5, de telles informations 10 correspondant, par exemple, à la présentation du contenu 11 dudit bloc, à l'agencement de ce contenu 11, à son positionnement...

De plus, chaque bloc 4, 5 contient son contenu 11, à savoir l'image 12 ou le texte 13 destiné à apparaître au niveau du document 1.

En fait, l'ensemble de ces information 9, 10 ainsi que l'identifiant 7 et le contenu 11 de ces blocs 4, 5 sont enregistrés au niveau dudit moyen de stockage 6, ceci bloc par bloc et pour chacun de ces blocs 4, 5.

Selon l'invention, l'on recueille, au niveau du moyen de stockage 6, bloc après bloc et pour chaque bloc 4, 5, les informations 9, 10 relatives au contenant et au contenu 11 de chacun des blocs 4, 5.

Encore selon l'invention, l'on associe l'identifiant 7 de chaque bloc 4, 5 ainsi que les informations 9, 10, relatives au contenant et au contenu 11 de chacun de ces blocs 4, 5, à un emplacement 15 d'un moyen de mémorisation 16, tel qu'une base de données.

Selon une autre caractéristique, l'on crée un tableau 14 dans lequel on reporte, bloc après bloc et pour chaque bloc 4, 5 présent au niveau du moyen de stockage 6, les informations 9, 10 relatives au contenant et au contenu 11 de chacun de ces blocs 4, 5. On observera que ces informations 9, 10 sont reportées dans le tableau 14 en fonction de l'identifiant 7 du bloc 4, 5 auquel correspondent lesdites informations 9, 10.

En fait, l'on peut encore associer les informations 9, 10 contenues dans le tableau 14 à un emplacement 15 de ce moyen de mémorisation 16. A ce propos et selon un mode de réalisation particulier, une telle association consiste à copier ledit tableau 14 dans ce moyen de mémorisation 16.

Il convient d'observer que les informations 9, 10 relatives au contenant et au contenu 11 des blocs 4, 5 sont constitués de différents types 17, 17', 17" d'informations relatives au contenant et au contenu 11 de chaque bloc 4, 5 (position du bloc, orientation, forme, profondeur, type; présentation, agencement, positionnement...). On remarquera qu'à chaque type 17, 17', 17" d'information correspond une information unitaire 19, 19', 19'' disponible au niveau dudit moyen de stockage 6, pour chacun des blocs 4, 5 et au niveau de ces derniers.

Ainsi, lorsque l'on recueille, au niveau dudit moyen de stockage 6, les informations 9, 10 relatives au contenant et au contenu 11 des blocs 4, 5, l'on recueille, en fait, les informations unitaires 19, 19', 19'' correspondant à chaque type 17, 17', 17" d'informations.

Aussi, lorsque l'on associe les informations 9, 10, relatives au contenant et au contenu de chacun de ces blocs 4, 5, à un emplacement 15 du moyen de mémorisation 16, l'on associe, en fait, lesdites informations unitaires 19, correspondant à chaque type 17 d'information, à un emplacement 15 du moyen de mémorisation 16.

De même, lorsque l'on reporte lesdites informations 9, 10 dans le tableau 14, l'on reporte les informations unitaires 19, 19', 19'' correspondant à chaque type 17, 17', 17" d'informations. Ces informations unitaires 19 sont, en fait, reportées dans le tableau 14, selon leur type 17, pour chaque bloc 4, 5 et en fonction de l'identifiant 7 de ce dernier.

Un tel mode de réalisation nécessite, lors de la création dudit tableau 14, de prévoir pour ce dernier autant de colonnes 18, 18', 18'' que de types 17, 17', 17'' d'informations de manière à pouvoir classer dans ce tableau 14, d'une part, l'ensemble des informations unitaires 19, 19', 19" correspondant à tous les types 17, 17', 17'' d'information et, d'autre part, toutes les informations unitaires 19 correspondant à un même type 17 d'information dans une même colonne 18, ceci pour chaque bloc 4, 5 et en fonction de l'identifiant 7 de ce dernier.

En fait, il convient d'observer que l'on peut encore associer l'identifiant 7 de chaque bloc 4, 5 ainsi que chaque information unitaire 19, correspondant à chaque type 17 d'information relative à ce bloc 4, 5, notamment présente dans le tableau 14, à un emplacement 15 dans le moyen de mémorisation 16.

Là encore, une telle association peut consister en ce que l'on copie le tableau 14 dans ledit moyen de mémorisation 16.

On remarquera que les opérations consistant à créer le tableau 14, à recueillir les informations 9, 10, 19, à reporter ces dernières dans ledit tableau 14 et/ou à associer celles-ci et/ou l'identifiant 7 à un emplacement 15 d'un moyen de mémorisation 16, peuvent être exécutées par l'intermédiaire d'au moins un moyen de traitement tel qu'un logiciel.

Selon une autre caractéristique de la présente invention, l'on limite, au moins en partie, l'accès aux informations 9, 10, 19, selon le cas, associées à un emplacement 15 du moyen de mémorisation 16 et/ou contenues dans le tableau 14.

Une telle limitation s'applique, en fait et selon le cas, soit aux informations 9, 10 relatives au contenant et au contenu, soit à une partie au moins des informations unitaires 19.

On observera que cette limitation peut se faire en fonction de la nature (contenant et/ou contenu) de l'information 9, 10 et/ou du type 17 de cette information 19 et/ou de l'opérateur ayant accès au moyen de mémorisation 16.

Au travers de cette limitation d'accès, on empêche ou on autorise, pour tel opérateur mais pas pour tel autre, la visualisation, l'accessibilité et/ou la modification d'une partie au moins desdites informations 9, 10, 19. Une telle limitation permet, avantageusement, d'empêcher, par exemple, la modification non souhaitée d'une information par un opérateur.

Selon une autre caractéristique de la présente invention, l'on recueille, au niveau dudit moyen de stockage 6, bloc après bloc et pour chaque bloc 4A, 4B, 4C correspondant à un texte, le contenu 11 de ce bloc texte 4A, 4B, 4C.

L'on crée, pour chaque bloc texte 4A, 4B, 4C, un fichier texte 20 dans lequel on reporte le contenu 11 de ce bloc texte 4A, 4B, 4C.

Une autre caractéristique consiste en ce que l'on associe l'identifiant 7 de chaque bloc 4 correspondant à un texte ainsi que les informations 9, 10, relatives au contenant et au contenu 11 de ce bloc texte 4, au fichier texte 20 dans lequel figure le contenu 11 de ce bloc texte 4.

L'on peut encore associer les informations unitaires 19 relatives à ce bloc texte 4 ainsi que l'identifiant 7 de dernier audit au fichier texte 20 dans lequel figure le contenu 11 de ce bloc texte 4.

A ce propos, on observera que l'identifiant 7 et/ou les informations 9, 10, 19, auxquels on associe le fichier texte 20, correspondent, selon le cas, à ceux reportés dans le tableau 14, à ceux figurant au niveau du moyen de stockage 6 et/ou à ceux associés à un emplacement 15 du moyen de mémorisation 16.

En fait, on observera que le fichier texte 20, destiné à contenir le contenu 11 d'un bloc texte 4, est généré, selon le cas, soit lors du report, dans le tableau 14, des informations 9, 10, 19 relatives au contenant et au contenu 11 de ce bloc texte 4, soit lors de l'association de ces informations 9, 10, 19 à un emplacement 15 du moyen de mémorisation 16.

Selon une autre caractéristique de la présente invention, lorsque l'on reporte, dans ce fichier texte 20, le contenu 11 d'un bloc texte 4, l'on constitue, dans ce fichier texte 20, au moins un pavé 21, 21'.

Un tel pavé 21 est défini par deux parties 22, 23, une première partie 22 et une seconde 23 partie.

Cette première partie 22 est constituée par au moins un code de base 24, 24' tandis que la seconde partie 23 est constituée par au moins un caractère alphanumérique 25.

Ce ou ces caractères alphanumériques 25 sont, d'une part, associés au(x) code(s) de base 24. D'autre part, ce ou ces caractères alphanumériques 25 correspondent au texte, associé audit bloc texte 4, et apparaissant au niveau de la page 2 du document 1.

Une autre caractéristique consiste en ce que l'on associe le ou les caractères alphanumériques 25, correspondant à la seconde partie 23 dudit pavé 21, à un emplacement 15 dans la base de donnée 16.

De même, il peut être envisagé d'associer le ou les codes de base 24, correspondant à la première partie 22 du pavé 21, à un emplacement 15 dans ladite base de donnée 16.

A ce propos, on observera qu'il est possible de définir un tableau de correspondance entre le ou les codes de base 24 de la première partie 22 du pavé 21 et le ou les caractères alphanumériques 25 de la seconde partie 23 de ce pavé 21. C'est, notamment, un tel tableau qui peut être associé à un emplacement 15 dans ledit moyen de mémorisation 16, voire copié dans ce dernier.

En fait, lorsque la première partie 22 d'un pavé 21 est constituée par une succession 26 de codes de base 24, une solution consiste à définir un code additionnel de base 27 correspondant à cette succession 26 de codes de base 24.

L'on associe, alors, cette succession 26 de codes de base 24 et/ou ledit code additionnel de base 27 à un emplacement 15 du moyen de mémorisation 16.

Là encore, il est possible de définir un tableau de correspondance entre la succession 26 de codes de base 24 et le code additionnel de base 27 correspondant. C'est, plus particulièrement, ce tableau qui peut être associé à un emplacement 15 dans ladite base de donnée 16, voire copié dans ce dernier.

A ce propos, on observera que, lorsque le fichier texte 20 comporte plusieurs pavés 21 dont la première partie 22 est constituée par une succession de codes de base, il est possible de définir, pour chacune de ces successions de codes de base, un code additionnel de base propre à chaque succession.

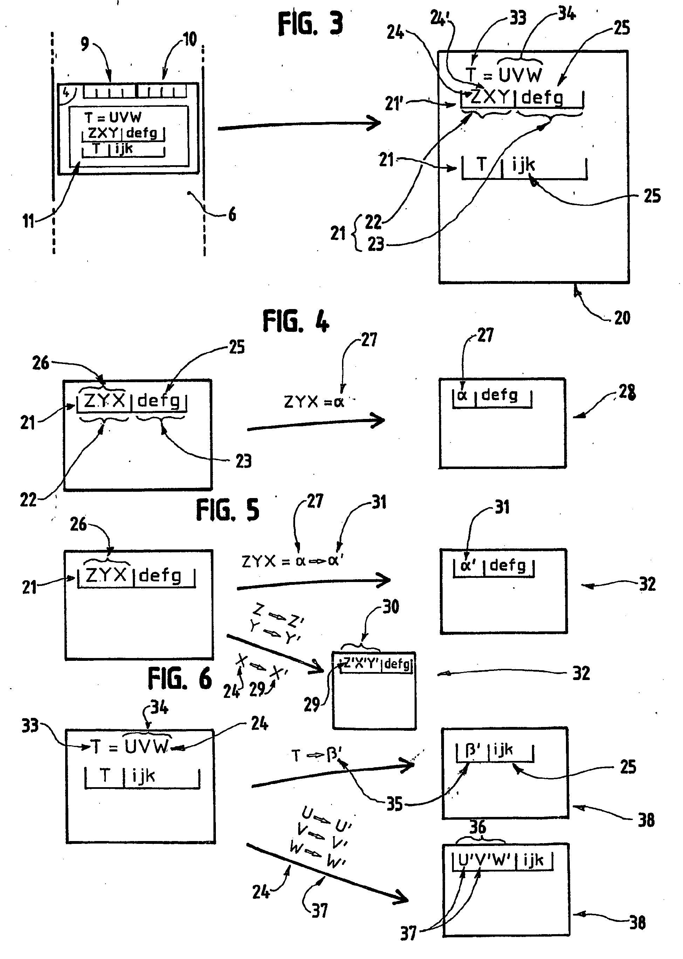

On observera que, à partir dudit fichier texte 20, il est possible de créer un fichier texte complémentaire 28, comme visible figure 4, et dans lequel on remplace la ou les successions 26 de codes de base 24 correspondant à la première partie 22 du ou des pavés 21 par le ou les codes additionnels de base 27 correspondant.

L'on associe le fichier texte complémentaire 28 ainsi créé à un emplacement 15 du moyen de mémorisation 16, notamment par enregistrement au niveau de ce dernier.

Il convient d'observer que le ou les codes de base 24, figurant, d'une part, dans le contenu 11 d'un bloc texte 4 au niveau dudit moyen de stockage 6 et, d'autre part, dans le fichier texte 20, sont, usuellement, spécifiques au moyen de traitement (logiciel) pour la mise en page de sorte qu'il ne sont pas automatiquement aptes à être, d'une part, compris et, d'autre part, utilisés par un autre moyen de traitement (tel qu'un logiciel), notamment de traitement de texte.

Aussi, il est, dans la plupart des cas, indispensable d'interpréter ce(s) code(s) de base 24 pour le(s) mettre sous une forme exploitable par un autre moyen de traitement tel qu'un logiciel.

Il en résulte que, pour chaque fichier texte 20, l'on interprète le ou les codes de base 24, constituant la première partie 22 du ou des pavés 21 de ces fichiers texte 20, afin de définir un ou des code(s) de base interprété(s) 29. L'on associe, alors, le(s) code(s) interprété(s) 29 ainsi que le(s) caractère(s) alphanumérique(s) 25, constituant la seconde partie 23 dudit ou desdits pavés 21, à un emplacement 15 dans le moyen de mémorisation 16.

Une telle association peut encore être constituée au travers d'un tableau, associé à un tel emplacement 15 ou copié dans le moyen de mémorisation 16, ce tableau établissant une correspondance entre le (s) code (s) interprété (s) 29 et le (s) caractère(s) alphanumérique(s) 25. Il est, également, possible de définir un tableau de correspondance entre le(s) code(s) de base 24 et, selon le cas, le(s) code(s) interprété(s) 29 ou le(s) caractère(s) alphanumérique(s) 25, ce tableau alors étant associé à un emplacement 15 dans le moyen de mémorisation 16.

A ce propos, on remarquera que, lorsque la première partie 22 d'un pavé 21 est constituée par une succession 26 de codes de base 24, l'on interprète ces derniers 24 et l'on constitue une succession 30 de codes interprétés 29.

L'on définit, alors, un code additionnel interprété 31 correspondant à cette succession 30 de codes interprétés 29.

L'on associe cette succession 30 de codes interprétés 29 et/ou ledit code additionnel interprété 31 à un emplacement 15 dans le moyen de mémorisation 16.

Il est, également, possible d'associer, d'une part, la succession 26 de codes de base 24 et/ou le code additionnel de base 27 et, d'autre part, la succession 30 de codes interprétés 29 et/ou ledit code additionnel interprété 31, à un emplacement 15 dans le moyen de mémorisation 16.

Là encore, il est possible de définir un tableau de correspondance entre, d'une part, la succession 26 de codes de base 24 et/ou le code additionnel de base 27 et, d'autre part, la succession 30 de codes interprétés 29 et/ou ledit code additionnel interprété 31. C'est, plus particulièrement, ce tableau qui peut être associé à un emplacement 15 dans ladite base de donnée 16, voire copié dans ce dernier.

Une autre caractéristique, illustrée figure 5, consiste en ce que l'on crée, à partir du fichier texte 20, un fichier texte additionnel 32 dans lequel on remplace la succession 26 de codes de base 24 correspondant à la première partie 22 du ou des pavés 21, selon le cas, par la succession 30 de codes interprétés 29 ou par le code additionnel interprété 31 qui correspond à cette succession 30.

L'on associe, alors, ce fichier texte additionnel 32 à un emplacement 15 du moyen de mémorisation 16, notamment par enregistrement, dans ce dernier 16, dudit fichier texte additionnel 32.

Selon une autre caractéristique de la présente invention, lorsqu'on reporte, dans un fichier texte 20, le contenu 11 d'un bloc texte 4, l'on intègre, dans ce fichier texte 20, au moins un code spécifique de base 33 défini par une succession 34 de codes de base 24. Ce code spécifique de base 33 correspond, par exemple, à un style spécifique de présentation d'une partie au moins du texte correspondant audit bloc texte 4. Ce code spécifique de base 33 est, usuellement, défini en tête du fichier texte 20 et est associé à la première partie 22 d'au moins un pavé 21 que comporte ce fichier texte 20.

L'on associe ce code spécifique de base 33 et/ou la succession 34 de codes de base 24 correspondant à ce dernier 33 à un emplacement 15 dans le moyen de mémorisation 16.

Une autre caractéristique consiste en ce que l'on interprète les codes de base 24 constituant la succession 34 de codes de base 24 définissant le code spécifique de base 33. L'on définit un code spécifique interprété 35 constitué par une succession 36 des codes 37 correspondant aux codes de base 24 interprétés.

L'on associe cette succession 36 de codes interprétés 37 et/ou ledit code spécifique interprété 35 à un emplacement 15 dans le moyen de mémorisation 16.

A ce propos, il est possible de définir un tableau de correspondance entre, d'une part, le code spécifique de base 33 et/ou la succession 34 de codes de base 24 correspondant à ce dernier 33 et, d'autre part, la succession 36 de codes interprétés 37 et/ou ledit code spécifique interprété 35. Là encore ce tableau peut être enregistré dans le moyen de mémorisation 16.

Comme visible figure 6, à partir du fichier texte 20, l'on peut définir un fichier texte supplémentaire 38 dans lequel on remplace le code spécifique de base 33 par le code spécifique interprété 35. L'on associe ce fichier texte supplémentaire 38 à un emplacement 15 du moyen de mémorisation 16, notamment en assurant son enregistrement dans ce dernier 16.

Comme décrit ci-dessus, il est possible d'associer le fichier texte 20, le fichier texte complémentaire 28, le fichier texte additionnel 32 ainsi que le fichier texte supplémentaire 38 à un emplacement 15 de la base de donnée 16, une telle association pouvant être opérée en copiant ce ou ces fichiers dans ledit moyen de mémorisation 16.

Il est évident qu'un fichier de base 20 peut comporter un ou plusieurs pavés 21 dont la première partie 22 est constituée par au moins un code de base 24 et/ou une succession 26 de codes de base 24, notamment définie par un code additionnel de base 27 ou un code spécifique de base 33, comme visible figure 3.

Un mode de réalisation préféré consiste, alors, à créer un fichier texte finalisé pour lequel la première partie 22 du ou des pavés 21 est définie, selon le cas, par un code interprété 29, un code additionnel interprété 31 ou un code spécifique interprété 35. Ce fichier texte finalisé comporte, associé auxdits codes interprétés (29, 31, 35), le ou les caractères alphanumériques 25.

C'est, plus particulièrement, ce fichier texte finalisé qui est associé à un emplacement 15 dans le moyen de mémorisation 16, notamment par enregistrement dans ce dernier.

C'est, également, au niveau de ce fichier texte finalisé et/ou de ces fichiers (20, 28, 32, 38), de préférence du fichier texte complémentaire 32 ou supplémentaire 38, qu'un opérateur est susceptible d'intervenir pour apporter des modifications au contenu 11 du texte correspondant à un bloc texte 4.

A ce propos, il convient d'observer que, lorsque l'on associe ce fichier finalisé et/ou les autres fichiers texte (20, 28, 32, 38) à un emplacement 15 dudit moyen de mémorisation 16, l'on peut limiter, au moins en partie, l'accès à une partie au moins de ces fichiers texte (20, 28, 32, 38, finalisé) et/ou au contenu 11 du texte de ces derniers. Une telle limitation peut se faire sur au moins une partie dudit contenu 11 du texte et/ou en fonction de la nature de la modification et/ou de l'opérateur en charge de cette dernière.

A ce propos, on remarquera qu'il est possible de limiter, au moins en partie, l'accès au(x) caractère(s) alphanumérique(s) 25 et/ou à une partie au moins des différents codes (24, 26, 27, 29, 30, 31, 33, 34, 35, 36, 37), notamment associés à un emplacement 15 dudit moyen de mémorisation 16 ou figurant dans un tableau.

Aussi, selon un mode particulier de réalisation, le fichier texte finalisé et/ou les autres fichiers (20, 28, 32, 38) peuvent être définis de telle sorte que lesdits codes de base (24, 26, 27, 33, 34) ou interprétés (29, 30, 31, 35, 36, 37) ne soient pas accessibles à un opérateur et que ce dernier peut uniquement accéder et/ou apporter des modifications au(x) caractère(s) alphanumériques 35.

Il convient d'observer que le(s) code(s) de base (24, 26, 27, 33, 34) et, par conséquent, les codes interprétés (29, 30, 31, 35, 36, 37) peuvent être caractéristiques d'une certaine information apparaissant au niveau du contenu 11 d'un bloc texte 4, une telle information correspondant, par exemple, à un style particulier de présentation du texte, à un slogan, à une référence (notamment de prix, d'un article d'un catalogue...) ou autre.

A ce propos, on remarquera qu'il est, parfois, souhaitable de conserver cette information caractéristique sans y apporter de modification ce qui est envisageable au travers de la limitation d'accès susmentionnée.

Cependant, il peut encore être envisagé de répertorier une telle information caractéristique. A cet effet, le procédé selon l'invention consiste, encore, à détecter, au niveau du contenu 11 de l'un au moins des blocs texte 4, une telle information et à associer cette dernière à un emplacement 15 du moyen de mémorisation 16.

A ce propos, une telle détection peut se faire de manière manuelle et/ou automatique.

Là encore, l'accès à une telle information caractéristique peut, au moins en partie, être limité.

Il encore possible d'associer, notamment au travers du moyen de mémorisation 16 et/ou d'un tableau, d'une part, une partie au moins des codes interprétés (29, 30, 31, 35, 36, 37) et/ou, d'autre part, une partie au moins des codes de base (24, 26, 27, 33, 34) et/ou, d'autre part encore, l'information caractéristique susmentionnée et relative à une indication sur le style, à une référence ou autre.

De tels tableaux peuvent, là encore, être associés à un emplacement 15 dans le moyen de mémorisation 16, voire être enregistrés dans ce dernier.

Une telle association permet de définir un filtre apte, lorsqu'on recueille successivement le contenu 11 de différents blocs texte 4 au niveau dudit moyen de stockage 6, à assurer automatiquement la correspondance entre le(s) code(s) de base (24, 26, 27, 33, 34), recueillis au niveau du moyen de stockage 6, le(s) code interprété(s) (29, 30, 31, 35, 36, 37) et/ou l'information caractéristique associée.

Ceci permet, par exemple, de repérer tous les codes de base (24, 26, 27, 33, 34) correspondant à une certaine information (notamment caractéristique de la référence d'un article d'un catalogue, d'un prix ou autre) pour, ultérieurement, incorporer cette information au niveau d'un emplacement 15 spécifique dans le moyen de mémorisation 16 et/ou extraire cette information, par exemple en vue d'établir un listing.

Ceci permet, également et après modification du contenu 11 du texte d'un bloc texte 4 au niveau d'un fichier texte (32, 38 ou finalisé), d'assurer automatiquement la correspondance entre le(s) code(s) interprété(s) (29, 30, 31, 35, 36, 37) et le(s) code(s) de base (24, 26, 27, 33, 34) de manière à pouvoir générer, à partir du fichier texte modifié, un nouveau moyen de stockage 6 et/ou un nouveau document 1 contenant des codes susceptibles d'être compris et utilisés par le moyen de traitement (logiciel) pour la mise en page dudit moyen de stockage 6.

Evidemment, lorsque ces modifications sont apportées au niveau d'un fichier texte (20, 28) contenant des codes de base (24, 26, 27, 33, 34), une telle correspondance n'est pas indispensable et il est possible de générer, à la base des fichiers texte au contenu 11 modifié, un nouveau moyen de stockage 6 et/ou un nouveau document 1 contenant des codes susceptibles d'être compris et utilisés par le moyen de traitement (logiciel) pour la mise en page dudit moyen de stockage 6.

A ce propos, il convient d'observer que, lorsque les informations 9, 10 relatives au contenant et au contenu 11 et/ou les informations unitaires 19 sont aptes à être modifiées, il est, là encore, possible de générer un nouveau moyen de stockage 6 et/ou un nouveau document 1.

On observera que la génération d'un tel nouveau moyen de stockage 6 et/ou d'un tel nouveau document 1 peut être accompli par l'intermédiaire d'au moins un moyen de traitement tel qu'un logiciel.

Selon une autre caractéristique de la présente invention, lors de la création d'un fichier texte 20 correspondant à un bloc texte 4, l'on crée une balise 39 spécifique à ce fichier texte 20, associée à ce dernier, et définissant un chemin d'accès audit fichier texte 20, voire, par l'intermédiaire d'un moyen d'association approprié, aux fichiers (28, 32, 38 ou finalisé) qui correspondent audit fichier texte 20.

L'on associe cette balise 39 à un emplacement 15 dans le moyen de mémorisation 16, notamment par enregistrement dans ce dernier.

De plus, lors de la création de cette balise 39, l'on associe cette dernière à une information 40 relative à la page 2 du document 1 dans laquelle figure le bloc texte 4 correspondant au fichier texte 20 associé à ladite balise 39, comme visible figure 2.

L' on associe cette information 40 à un emplacement 15 dans le moyen de mémorisation 16.

Selon une caractéristique additionnelle, l'on crée, pour au moins une page 2 du document 1 et par page, un fichier balisé dans lequel l'on reporte toutes les balises 39 correspondant aux blocs texte 4 de cette page 2.

Un tel mode de réalisation permet, en fait, de rassembler toutes les balises 39 permettant d'accéder aux contenus 11 de tous les blocs texte 4 d'une même page 2 d'un document 1, notamment en vue d'une intervention sur cette page 2.

L'on associe ce fichier balisé à un emplacement 15 dans le moyen de mémorisation 16, notamment par enregistrement dans ce dernier.

A ce propos, on observera qu'il est possible de limiter, au moins en partie, l'accès à l'une au moins des balises 39 et/ou à un tel fichier balisé, ceci en vue d'empêcher un opérateur non autorisé de visualiser et/ou de modifier une telle balise 39 ou un tel fichier balisé.

Une telle limitation permet, par exemple, d'éviter une altération notamment involontaire, voire accidentelle, de ces balises 39 par un opérateur en charge d'apporter des modifications au contenu 11 du ou des blocs texte 4 de la page 2 correspondant à ce fichier balisé.

L'on peut, encore, associer à ce fichier balisé un fichier balisé secondaire au niveau duquel apparaît le contenu 11 des blocs texte 4 correspondant à la page 2, ledit contenu 11 étant apte à être, au moins en partie, modifié.

Là encore, il est possible d'associer ces fichiers balisés secondaires à un emplacement 15 dans le moyen de mémorisation 16, notamment par enregistrement au niveau de ce dernier.

On observera qu'ils est, là encore, possible de limiter, au moins en partie, l'accès, selon le cas, à un tel fichier balisé secondaire ou au contenu 11 des blocs texte 4 d'un tel fichier balisé secondaire, notamment en limitant, au moins en partie, l'accès au(x) caractère(s) alphanumérique(s) 25 et/ou à une partie au moins des différents codes tel qu'évoqué ci-dessus.

Après que les modifications aient été apportées au niveau du fichier balisé ou du fichier balisé secondaire, il est possible de générer un nouveau fichier balisé ou un nouveau fichier balisé secondaire à la base duquel l'on peut reconstituer une nouvelle page 2 au niveau de laquelle apparaissent les modifications apportées.

Le fait de faire appel à de tels fichiers balisés permet, avantageusement, de réaliser, notamment après modification, un tract ou analogue consistant, par exemple, en un extrait d'un catalogue défini par le document 1.

En ce qui concerne les blocs 5 correspondant à une image, on observera que l'on associe l'identifiant 7 de chacun de ces blocs 5 ainsi que les informations 9, 10 relatives au contenant et au contenu de ce bloc 5, au contenu dudit bloc image 5 figurant, notamment, au niveau du moyen de stockage 6.

De plus, il est possible d'associer l'identifiant 7 de chaque bloc 5 correspondant à une image ainsi que le contenu de ce bloc image 5 à un emplacement 15 du moyen de mémorisation 16.

Une telle association peut, là encore, s'opérer par un enregistrement dans ledit moyen de mémorisation 16.

Là encore, il est possible de limiter, au moins en partie, l'accès au contenu d'un tel bloc image 5.

Il convient d'observer que les blocs 4, 5 figurant au niveau du moyen de stockage 6, recèlent, encore, des informations concernant les couleurs apparaissant au niveau des images et/ou des textes de ces blocs 4, 5.

A ce propos, on remarquera que, à l'instar des codes de base 24, ces informations adoptent, généralement, une forme spécifique au moyen de traitement (logiciel) pour la mise en page de sorte qu'elles peuvent ne pas être compréhensibles par d'autre moyens de traitement (logiciels).

Aussi, une solution consiste à analyser ces informations et à décomposer les couleurs, détectées au niveau dudit moyen de stockage 6, en une composition de couleurs primaires (vert, rouge, bleu).

L'on associe une telle composition de couleurs primaires à chaque information correspondant à une couleur détectée au niveau dudit moyen de stockage 6.

L'on associe, alors, cette composition de couleurs primaires et/ou l'information, relative à cette couleur et détectée au niveau du moyen de stockage 6, à un emplacement 15 dans le moyen de mémorisation 16.

Là encore, il est possible de limiter, au moins en partie, l'accès à cette composition de couleur et/ou à l'information, relative à cette couleur et détectée au niveau du moyen de stockage 6.

Selon un mode préféré de réalisation visible figure 2, l'on crée un tableau 41 dans lequel on reporte, en fonction de chaque information relative à une couleur donnée détectée au niveau du moyen de stockage 6, la composition de couleurs primaires correspondant à cette information.

C'est, plus particulièrement, ce tableau 41 qui sera associé à l'emplacement dans le moyen de mémorisation 16, notamment par enregistrement dans ce dernier.

Il convient d'observer qu'au moins certaines opérations effectuées au travers du procédé décrit ci-dessus et consistant, notamment :
- à recueillir des informations 9, 10, 19 relatives au contenant et au contenu 11 de blocs 4, 5 et/ou des informations relatives aux couleurs apparaissant dans ces blocs 4, 5 ;
- à recueillir le contenu 11 de ces blocs 4, 5 ;
- à créer des tableaux (14, 41) ;
- à générer des fichiers texte (20, 28, 32, 38), des fichiers balisés et/ou des fichiers balisés secondaires ;
- à reporter des informations 9, 10, 19 d'un bloc 4, 5 dans un tableau ;
- à reporter le contenu 11 d'un bloc texte 4 dans un fichier texte ;
- à définir des codes (24, 27, 33), des successions de codes (26, 34) et/ou à interpréter ceux-ci pour définir des codes interprétés (29, 35, 37) ou des successions (30, 36) de codes interprétés ;
- à définir des balises 39 ;
- à associer au moins certaines des caractéristiques susmentionnées entre elles et/ou à un emplacement 15 d'un moyen de mémorisation 16 tel qu'une base de données ;
- à limiter, au moins en partie, l'accès aux données, notamment associées à un emplacement 15 du moyen de mémorisation 16 ;
peuvent, au moins en partie, être exécutées par l'intermédiaire d'au moins un moyen de traitement tel qu'un logiciel. Ce ou ces moyens de traitement sont aptes à mettre en oeuvre, au moins en partie, ledit procédé décrit ci-dessus.

La présente invention permet de constituer un moyen de mémorisation 16, tel qu'une base de données, regroupant toutes les informations relatives au contenant et au contenu des blocs entrant dans la composition des pages d'un document.

Cette invention permet, également, de mettre ces informations sous une forme compréhensible et exploitable par un autre moyen de traitement tel qu'un logiciel, notamment pour en assurer une diffusion, en tout ou partie, sur un réseau du type internet.

Ceci permet d'apporter des modifications au contenu des blocs des pages d'un document.

Au travers d'une telle invention, il est possible, à partir d'un document figurant sur un moyen de stockage généré par un logiciel de mise en page spécifique, de recueillir toutes les informations relatives au contenant et au contenu des blocs constituant ce document, voire le contenu lui-même de ces blocs. Ces informations sont regroupées au niveau dudit moyen de mémorisation et les modifications qu'il est nécessaire d'apporter auxdits blocs peuvent se faire, dans un premier temps, uniquement au niveau des données figurant dans ce moyen de mémorisation, ceci de manière indépendante par rapport au logiciel de mise en page et au moyen de stockage 6.

En fait, lorsque toutes les modifications requises ont été apportées au contenu des blocs, il est possible de générer un nouveau moyen de stockage, d'une part, compatible avec le moyen de traitement (logiciel) pour la mise en page et, d'autre part, comportant toutes les modifications et, d'autre part encore, susceptible d'adopter une forme autorisant l'impression du document modifié.

Le moyen de mémorisation défini à l'aide du procédé selon, l'invention permet, encore, de gérer, en continu, le processus de constitution et de modification des pages d'un catalogue, ceci, notamment, en fonction du degré d'avancement du processus, des différents intervenants...

A partir des données contenues dans le moyen de mémorisation, il est possible de regrouper un certain nombre d'informations particulières apparaissant dans les blocs et au niveau du moyen de stockage. En particulier, il est possible de recueillir des informations concernant des articles, des prix correspondant à ces derniers, figurant dans un catalogue.

A partir de ces données, il est, également, possible de créer une ou plusieurs nouvelles pages correspondant, par exemple, à un ou plusieurs extraits d'un catalogue. Cet extrait peut adopter la forme d'un tract ou analogue reprenant le contenu, éventuellement partiel ou mis à jour, d'une ou plusieurs pages d'un catalogue.

Un tel mode de réalisation permet, encore, de constituer et/ou de modifier des pages susceptibles d'être mises en ligne sur un réseau télématique ou informatique.

## Revendications

1. Procédé pour la constitution d'un moyen de mémorisation (16) du type base de données contenant des informations (9, 10) relatives au contenant et au contenu d'un ensemble (3) de blocs (4, 5) correspondant chacun à un texte ou à une image, et dont l'agencement approprié permet de définir la composition d'une ou des pages (2) d'un document (1) dont la mise en page est assurée par un moyen de traitement approprié associé à un moyen de stockage (6) au niveau duquel sont enregistrées, bloc par bloc et pour chaque bloc, d'une part, toutes lesdites informations (9, 10) relatives au contenant et au contenu de l'ensemble de ces blocs (4, 5) et, d'autre part, le contenu (11) de ces derniers, chaque bloc (4, 5) étant associé à un identifiant (7) permettant son identification au niveau dudit moyen de stockage (6),
le procédé consistant, par l'intermédiaire d'un moyen de traitement du type logiciel, à :
- recueillir, au niveau dudit moyen de stockage (6), bloc après bloc et pour chaque bloc, les informations (9, 10) relatives au contenant et au contenu (11) de chaque bloc (4, 5) ;
- recueillir, au niveau dudit moyen de stockage (6), bloc après bloc et pour chaque bloc (4) correspondant à un texte, le contenu (11) de ce bloc texte (4) et à créer, pour chacun de ces blocs texte (4), un fichier texte (20) dans lequel on reporte le contenu (11) de ce bloc texte (4) ;
ledit procédé consistant également à :
- associer l'identifiant (7) de chaque bloc (4, 5) ainsi que les informations (9, 10), relatives au contenant et au contenu (11) de chacun de ces blocs (4, 5), à un emplacement (15) dans le moyen de mémorisation (16);
- associer l'identifiant (7) de chaque bloc (4) correspondant à un texte ainsi que, selon le cas, les informations (9, 10), relatives au contenant et au contenu (11) de ce bloc texte (4), et/ou les informations unitaires (19) relatives à ce bloc texte (4), au fichier texte (20) dans lequel figure le contenu (11) de ce bloc texte (4), sous la forme d'un ou de plusieurs pavés (21) dont la première partie (22) est constituée par au moins un code de base 24 et/ou une succession 26 de codes de base (24) et dont la seconde partie (23) est constituée par au moins une caractéristique alphanumérique (25);
- associer l'identifiant (7) de chaque bloc (4) correspondant à un texte ainsi que chaque fichier texte (20) correspondant à un bloc texte (4), à un emplacement (15) dans le moyen de mémorisation (16);
- créer un tableau (14) dans lequel on reporte, bloc après bloc, pour chaque bloc et en fonction de l'identifiant (7) de ce dernier, selon le cas, les informations (9, 10) relatives au contenant et au contenu (11) de chaque bloc (4, 5) et/ou les informations unitaires (19), ceci par type (17) d'information unitaire (19) ;
- créer, lors de la création d'un fichier texte (20), correspondant à un bloc texte (4), une balise (39), spécifique à ce fichier texte (20) et associée à ce dernier (20), et associer cette balise (39) à un emplacement (15) dans le moyen de mémorisation (16);
procédé **caractérisé en ce qu'**il consiste, en outre, à :
- créer, à partir de chaque fichier texte (20), au moins un fichier texte finalisé pour lequel la première partie (22) du ou des pavés (21) est définie, selon le cas, par un code interprété (29), un code additionnel interprété (31) ou un code spécifique interprété (35), les pavés (21) comportant, associés auxdits codes interprétés (29, 31, 35), le ou les caractères alphanumériques (25), et,
- associer le fichier texte (20), d'une part, et un fichier texte complémentaire (28) dont les premières parties (22) des pavés (21) correspondent à des codes interprétés (29), un fichier texte additionnel (32) dont les premières parties (22) des pavés (21) correspondent à des codes additionnels interprétés (31) et/ou un fichier texte supplémentaire (38) dont les premières parties des pavés (21) correspondent à des codes spécifiques interprétés (35), d'autre part, à un emplacement (15) de la base de données (16).

2. Procédé selon la revendication 1, **caractérisé par le fait que** l'on recueille, au niveau dudit moyen de stockage (6), différents types (17) d'informations unitaires (19) correspondant aux informations (9, 10) relatives au contenant et au contenu de chaque bloc (4, 5), que l'on associe l'identifiant (7) de chaque bloc (4, 5) ainsi que chaque information unitaire (19), correspondant à chaque type (17) d'information (9, 10) relative à ce bloc (4, 5), à un emplacement (15) dans le moyen de mémorisation (16).

3. Procédé selon l'une quelconque des revendications précédentes, **caractérisé par le fait que** l'on limite, au moins en partie, l'accès, selon le cas, soit aux informations (9, 10) relatives au contenant et au contenu (11) de chaque bloc (4, 5), soit à une partie au moins des informations unitaires (19).

4. Procédé selon l'une quelconque des revendications précédentes, **caractérisé par le fait que** l'on génère le fichier texte (20) destiné à contenir le contenu (11) de ce bloc texte (4), selon le cas, lors du report, dans le tableau (14), des informations (9, 10, 19) relatives au contenant et au contenu (11) d'un bloc (4) correspondant à un texte, ou lors de l'association de ces informations (9, 10, 19) à un emplacement (15) du moyen de mémorisation (16).

5. Procédé selon l'une quelconque des revendications précédentes, **caractérisé par le fait que**, lorsque l'on reporte, dans un fichier texte (20), le contenu (11) d'un bloc (4) correspondant à un texte, l'on constitue, dans ce fichier texte (20), au moins un pavé (21) défini par deux parties (22, 23) dont la première partie (22) est constituée par au moins un code de base (24) tandis que la seconde partie (23) est constituée par au moins un caractère alphanumérique (25), d'une part, associé aux codes de base (24) et, d'autre part, correspondant au texte, associé audit bloc-texte (4), et apparaissant au niveau de la page (2) du document (1).

6. Procédé selon la revendication 5, **caractérisé par le fait que** l'on associe le ou les caractères alphanumériques (25) correspondant à la seconde partie (23) du pavé (21), voire le ou les codes de base (24) de la première partie (22) du pavé (21), à un emplacement (15) dans ledit moyen de mémorisation (16).

7. Procédé selon l'une quelconque des revendications 5 ou 6, **caractérisé par le fait que**, lorsque la première partie (22) d'un pavé (21) est constituée par une succession (26) de codes de base (24), on définit un code additionnel de base (27) correspondant à cette succession (26) de codes de base (24) et on associe cette succession (26) de code de base (24) et/ou ledit code additionnel de base (27) à un emplacement (15) du moyen de mémorisation (16).

8. Procédé selon la revendication 7, **caractérisé par le fait que**, à partir du fichier texte (20), l'on crée un fichier texte complémentaire (28) dans lequel on remplace la succession (26) de codes de base (24) correspondant à la première partie (22) du ou des pavés (21) par le code additionnel de base (27) correspondant et que l'on associe le fichier texte complémentaire (28) ainsi créé à un emplacement (15) dans le moyen de mémorisation (16).

9. Procédé selon l'une quelconque des revendications 5 ou 6, **caractérisé par le fait que**, pour chaque fichier texte (20), l'on interprète le ou les codes de base (24) constituant la première partie (22) du ou des pavés (21) de ces fichiers texte (20) et que l'on associe le ou les codes interprétés (29) ainsi que les caractères alphanumériques (25) constituant la seconde partie (23) du ou des pavés (21) de ces fichiers texte (20) à un emplacement (15) dans le moyen de mémorisation (16).

10. Procédé selon la revendication 9, **caractérisé par le fait que**, lorsque la première partie (22) d'un pavé (21) est constituée par une succession (26) de codes de base (24), l'on interprète ces codes de base (24), l'on constitue une succession (30) de codes interprétés (29) et/ou l'on définit un code additionnel interprété (31) correspondant à cette succession (30) de codes interprétés (29) et l'on associe cette succession (30) de codes interprétés (29) et/ou ledit code additionnel interprété (31) à un emplacement (15) du moyen de mémorisation (16).

11. Procédé selon l'une quelconque des revendications précédentes, **caractérisé par le fait que**, lorsqu'on l'on reporte, dans un fichier texte (20), le contenu (11) d'un bloc (4) correspondant à un texte, l'on intègre, dans ce fichier texte (20), au moins un code spécifique de base (33) défini par une succession (34) de codes de base (24) et correspondant, par exemple, à un style spécifique de présentation d'une partie au moins du texte correspondant audit bloc (4), ledit code spécifique de base (33) étant associé à la première partie (22) d'au moins un pavé (21) que comporte ledit fichier texte (20).

12. Procédé selon la revendication 11, **caractérisé par le fait que** l'on associe ledit code spécifique de base (33) et/ou la succession (34) de codes de base (24) correspondant à ce code spécifique de base (33) à un emplacement (15) dans le moyen de mémorisation (16).

13. Procédé selon l'une quelconque des revendications 11 ou 12, **caractérisé par le fait que** l'on interprète les codes de base (24) constituant la succession (34) de codes de base (24) définissant le code spécifique de base (33), que l'on définit un code spécifique interprété (35) constitué par la succession (36) des codes interprétés (37) et que l'on associe cette succession (36) de codes interprétés (37) et/ou ledit code spécifique interprété (35) à un emplacement (15) du moyen de mémorisation (16).

14. Procédé selon la revendication 13, **caractérisé par le fait que**, à partir du fichier texte (20), l'on crée un fichier texte supplémentaire (38) dans lequel on remplace le code spécifique de base (33) par le code spécifique interprété (35) correspondant et que l'on associe ce fichier texte supplémentaire (38) ainsi créé à un emplacement (15) dans le moyen de mémorisation (16).

15. Procédé selon l'une quelconque des revendications 5 à 14, **caractérisé par le fait que** l'on limite, au moins en partie, l'accès, selon le cas, à une partie au moins desdits fichiers texte (20, 28, 32, 38) et/ou au(x) caractère(s) alphanumérique(s) (25) et/ou à une partie au moins des codes (24, 26, 27, 29, 30, 31, 33, 34, 35, 36, 37), notamment associés à un emplacement (15) du moyen de mémorisation (16).

16. Procédé selon la revendication 1, **caractérisé par le fait que**, lors de la création de cette balise (39), l'on associe cette dernière (39) à une information (40) relative à la page (2) dans laquelle figure le bloc texte (4) correspondant au fichier texte (20) associé à ladite balise (39) et que l'on associe cette information (40) à un emplacement (15) dans le moyen de mémorisation (16).

17. Procédé selon l'une quelconque des revendications 1 ou 16, **caractérisé par le fait que** l'on crée, pour au moins une page (2) du document (1) et par page, un fichier balisé dans lequel on reporte toutes les balises (39) correspondant aux blocs texte (4) de cette page (2) et on associe ce fichier balisé à un emplacement (15) dans le moyen de mémorisation (16).

18. Procédé selon la revendication 17 **caractérisé par le fait que** l'on associe, audit fichier balisé, un fichier balisé secondaire au niveau duquel apparaît, apte à être au moins en partie modifié, le contenu (11) des blocs texte (4) correspondant à une page (2) et l'on associe ce fichier balisé secondaire à un emplacement (15) du moyen de mémorisation (16).

19. Procédé selon l'une quelconque des revendications 15 à 18, **caractérisé par le fait que** l'on limite, au moins en partie, l'accès, selon le cas, auxdites balises (39) et/ou au fichiers balisés et/ou au contenu (11) des fichiers balisés secondaires.

20. Procédé selon l'une quelconque des revendications précédentes, **caractérisé par le fait que** l'on associe l' identifiant (7) de chaque bloc (5) correspondant à une image ainsi que les informations (9, 10), relatives au contenant et au contenu de ce bloc (5), au contenu dudit bloc image (5).

21. Procédé selon l'une quelconque des revendications précédentes, **caractérisé par le fait que** l'on associe l'identifiant (7) de chaque bloc (5) correspondant à une image ainsi que le contenu de ce bloc (5) à un emplacement (15) dans le moyen de mémorisation (16).

22. Procédé selon l'une quelconque des revendications précédentes, **caractérisé par le fait que** l'on détecte, au niveau du moyen de stockage (6), des informations relatives aux différentes couleurs apparaissant dans les blocs (4, 5), que l'on associe une composition de couleurs primaires à chaque information correspondant à une couleur donnée, et que l'on associe cette composition et/ou l'information relative à cette couleur donnée à un emplacement (15) dans le moyen de mémorisation (16).

23. Procédé selon la revendication 28, **caractérisé par le fait que** l'on crée un tableau (41) dans lequel on reporte, en fonction de chaque information relative à une couleur donnée, la composition de couleurs primaires correspondant à cette information.

24. Procédé selon l'une quelconque des revendications 20 à 23, **caractérisé par le fait que** l'on limite, au moins en partie, l'accès, selon le cas, au contenu dudit bloc image (5) et/ou à la composition de couleurs primaires et/ou à l'information correspondant à une couleur donnée détectée au niveau du moyen de stockage (6).

## Patentansprüche

1. Verfahren zur Herstellung eines Speichermittels (16) vom Typ Datenbank, Informationen (9, 10) über die Form und den Inhalt einer Gruppe (3) von Blöcken (4, 5) enthaltend, die jeweils einem Text oder einem Bild entsprechen, und deren geeignete Anordnung erlaubt, den Aufbau einer oder mehrerer Seiten (2) eines Schriftstückes (1) zu definieren, dessen Layout durch ein geeignetes Verarbeitungsmittel sichergestellt ist, das mit einer Speichereinrichtung (6) verbunden ist, in der Block für Block und für jeden Block einerseits alle genannten Informationen (9, 10) über Form und Inhalt der Gruppe dieser Blöcke (4, 5) gespeichert sind, und andererseits der Inhalt (11) der letzteren, wobei jedem Block (4, 5) eine Kennung (7) zugeordnet ist, die seine Identifizierung in der genannten Speichereinrichtung (6) erlaubt,
wobei das Verfahren darin besteht, mit Hilfe eines Verarbeitungsmittels der Art eines Programmes:
- in der genannten Speichereinrichtung (6) Block für Block und für jeden Block die genannten Informationen (9, 10) über Form und Inhalt (11) jedes Blockes (4, 5) zu sammeln,
- in der genannten Speichereinrichtung (6) Block für Block und für jeden Block (4), der einem Text entspricht, den Inhalt (11) dieses Textblockes (4) zu sammeln und für jeden dieser Textblöcke (4) eine Textdatei (20) zu erstellen, in die der Inhalt (11) dieses Textblockes (4) eingetragen wird,
wobei das genannte Verfahren ebenfalls darin besteht:
- die Kennung (7) jedes Blockes (4, 5), sowie die Informationen (9, 10) über die Form und den Inhalt (11) jedes dieser Blöcke (4, 5) einer Stelle (15) im Speichermittel (16) zuzuordnen,
- die Kennung (7) jedes Blockes (4), der einem Text entspricht, sowie je nach Fall die Informationen (9, 10) über Form und Inhalt (11) dieses Textblockes (4) und/oder die Einzelinformationen (19) über diesen Textblock (4) der Textdatei (20) zuzuordnen, in der sich der Inhalt (11) dieses Textblockes (4) befindet, in Form eines oder mehrerer Felder (21), deren erster Teil (22) aus mindestens einem Basiscode (24) und/oder einer Folge (26) von Basiscodes (24) besteht, und deren zweiter Teil (23) aus mindestens einem alphanumerischen Kennzeichen (25) besteht,
- die Kennung (7) jedes Blockes (4), der einem Text entspricht, sowie jede Textdatei (20), die einem Textblock (4) entspricht, einer Stelle (15) im Speichermittel (16) zuzuordnen,
- eine Tabelle (14) zu erstellen, in die Block nach Block für jeden Block und in Abhängigkeit von dessen Kennung (7) je nach Fall, die Informationen (9, 10) über die Form und den Inhalt (11) jedes Blockes (4, 5) und/oder die Einzelinformationen (19), und zwar nach Art (17) der Einzelinformationen (19), eingetragen werden,
- bei Erzeugung einer Textdatei (20), die einem Textblock (4) entspricht, eine Markierung (39), die für diese Textdatei (20) spezifisch ist und dieser zugeordnet ist, zu erzeugen und diese Markierung (39) einer Stelle (15) im Speichermittel (16) zuzuordnen,
Verfahren, **dadurch gekennzeichnet, dass** es außerdem darin besteht:
- ausgehend von jeder Textatei (20) mindestens eine fertige Textdatei zu erstellen, für die der erste Teil (22) des oder der Felder (21) je nach Fall durch einen übersetzten Code (29), einen zusätzlichen übersetzten Code (31) oder einen übersetzten spezifischen Code (35) definiert wird, wobei die Felder (21) das oder die alphanumerischen Zeichen (25), zugeordnet zu den genannten übersetzten Codes (29, 31, 35), aufweisen, und
- die Textdatei (20) einerseits und eine komplementäre Textdatei (28), deren erste Teile (22) der Felder (21) übersetzten Codes (29) entsprechen, eine zusätzliche Textdatei (32), deren erste Teile (22) der Felder (21) zusätzlichen übersetzten Codes (31) entsprechen, und/oder eine ergänzende Textdatei (38), deren erste Teile der Felder (21) spezifischen übersetzten Codes (35) entsprechen, andererseits, einer Stelle (15) der Datenbank (16) zuzuordnen.

2. Verfahren nach Patentanspruch 1, **dadurch gekennzeichnet, dass** in der genannten Speichereinrichtung (6) verschiedene Arten (17) von Einzelinformationen (19) gesammelt werden, die den Informationen (9, 10) über Form und Inhalt (11) jedes Blockes (4, 5) entsprechen, dass die Kennung (7) jedes Blockes (4, 5), sowie jede Einzelinformation (19), die je einer Art (17) von Information (9, 10) über diesen Block (4, 5) entspricht, einer Stelle (15) im Speichermittel (16) zugeordnet wird.

3. Verfahren nach irgendeinem der vorangehenden Patentansprüche, **dadurch gekennzeichnet, dass** mindestens teilweise der Zugang, je nach Fall entweder zu den Informationen (9, 10) über Form und Inhalt (11) jedes Blockes (4, 5) oder zu mindestens einem Teil der Einzelinformationen (19) eingeschränkt wird.

4. Verfahren nach irgendeinem der vorangehenden Patentansprüche, **dadurch gekennzeichnet, dass** die Textdatei (20), die dazu bestimmt ist, den Inhalt (11) dieses Textblockes (4) aufzunehmen, je nach Fall bei der Eintragung der Informationen (9, 10, 19) über Form und Inhalt (11) eines Blockes (4), der einem Text entspricht, in die Tabelle (14) oder bei der Zuordnung dieser Informationen (9, 10, 19) zu einer Stelle (15) des Speichermittels (16) erzeugt wird.

5. Verfahren nach irgendeinem der vorangehenden Patentansprüche, **dadurch gekennzeichnet, dass** bei der Eintragung des Inhaltes (11) eines Blockes (4), der einem Text entspricht, in eine Textdatei (20) in dieser Textdatei (20) mindestens ein Feld (21) erstellt wird, das durch zwei Teile (22, 23) definiert wird, deren erster Teil (22) aus mindestens einem Basiscode (24) besteht, während der zweite Teil (23) aus mindestens einem alphanumerischen Zeichen (25) besteht, das einerseits den Basiscodes (24) zugeordnet ist und andererseits dem Text entsprechend dem genannten Textblock (4) zugeordnet ist und auf der Seite (2) des Schriftstückes (1) erscheint.

6. Verfahren nach Patentanspruch 5, **dadurch gekennzeichnet, dass** das oder die alphanumerischen Zeichen (25), die dem zweiten Teil (23) des Feldes (21) entsprechen, oder der oder die Basiscodes (24) des ersten Teils (22) des Feldes (21) einer Stelle (15) im genannten Speichermittel (16) zugeordnet werden.

7. Verfahren nach irgendeinem der Patentansprüche 5 oder 6, **dadurch gekennzeichnet, dass** in dem Fall, dass der erste Teil (22) eines Feldes (21) aus einer Folge (26) von Basiscodes (24) besteht, ein zusätzlicher Basiscode (27) definiert wird, der dieser Folge (26) von Basiscodes (24) entspricht, und dass diese Folge (26) von Basiscodes (24) und/oder der genannte zusätzliche Basiscode (27) einer Stelle (15) des Speichermittels (16) zugeordnet wird.

8. Verfahren nach Patentanspruch 7, **dadurch gekennzeichnet, dass** ausgehend von der Textdatei (20) eine komplementäre Textdatei (28) geschaffen wird, in der die Folge (26) von Basiscodes (24), die dem ersten Teil (22) des oder der Felder (21) entsprechen, durch den entsprechenden zusätzlichen Basiscode (27) ersetzt wird, und dass die so geschaffene komplementäre Textdatei (28) einer Stelle (15) im Speichermittel (16) zugeordnet wird.

9. Verfahren nach irgendeinem der Patentansprüche 5 oder 6, **dadurch gekennzeichnet, dass** für jede Textdatei (20) der oder die Basiscodes (24), die den ersten Teil (22) des Felds oder der Felder (21) dieser Textdateien (20) bilden, übersetzt werden und dass der oder die übersetzten Codes (29), sowie die alphanumerischen Zeichen (25), die den zweiten Teil (23) des Felds oder der Felder (21) dieser Textdateien (20) bilden, einer Stelle (15) im Speichermittel (16) zugeordnet werden.

10. Verfahren nach Patentanspruch 9, **dadurch gekennzeichnet, dass** in dem Fall, dass der erste Teil (22) eines Feldes (21) aus einer Folge (26) von Basiscodes (24) besteht, diese Basiscodes (24) übersetzt werden, dass eine Folge (30) übersetzter Codes (29) erstellt wird und/oder ein zusätzlicher übersetzter Code (31) definiert wird, der dieser Folge (30) übersetzter Codes (29) entspricht, und dass diese Folge (30) übersetzter Codes (29) und/oder der genannte zusätzliche übersetzte Code (31) einer Stelle (15) im Speichermittel (16) zugeordnet wird.

11. Verfahren nach irgendeinem der vorangehenden Patentansprüche, **dadurch gekennzeichnet, dass** bei der Eintragung des Inhaltes (11) eines Blockes (4), der einem Text entspricht, in eine Textdatei (20) in diese Textdatei (20) mindestens ein spezifischer Basiscode (33) eingefügt wird, der durch eine Folge (34) von Basiscodes (24) definiert ist und beispielsweise einem spezifischen Stil der Aufmachung mindestens eines Teils des dem genannten Block (4) entsprechenden Textes entspricht, wobei der genannte spezifische Basiscode (33) einem ersten Teil (22) mindestens eines Feldes (21) zugeordnet ist, den die genannte Textdatei (20) umfasst.

12. Verfahren nach Patentanspruch 11, **dadurch gekennzeichnet, dass** der genannte spezifische Basiscode (33) und/oder die Folge (34) von Basiscodes (24), die diesem spezifischen Basiscode (33) entsprechen, einer Stelle (15) im genannten Speichermittel (16) zugeordnet wird.

13. Verfahren nach irgendeinem der Patentansprüche 11 oder 12, **dadurch gekennzeichnet, dass** die Basiscodes (24), die die Folge (34) von Basiscodes (24) bilden, die dem spezifischen Basiscode (33) entspricht, übersetzt werden, dass ein übersetzter spezifischer Code (35) definiert wird, der aus der Folge (36) der übersetzten Codes (37) besteht, und dass diese Folge (36) übersetzter Codes (37) und/oder der genannte übersetzte spezifische Code (35) einer Stelle (15) des Speichermittels (16) zugeordnet wird.

14. Verfahren nach Patentanspruch 13, **dadurch gekennzeichnet, dass** ausgehend von der Textdatei (20) eine ergänzende Textdatei (38) geschaffen wird, in der der spezifische Basiscode (33) durch den entsprechenden übersetzten spezifischen Code (35) ersetzt wird, und dass diese so geschaffene ergänzende Textdatei (38) einer Stelle (15) des Speichermittels (16) zugeordnet wird.

15. Verfahren nach irgendeinem der Patentansprüche 5 bis 14, **dadurch gekennzeichnet, dass** mindestens teilweise der Zugang, je nach Fall entweder zu mindestens einem Teil der genannten Textdateien (20, 28, 32, 38) und/oder dem/den alphanumerischen Zeichen (25) und/oder zu mindestens einem Teil der Codes (24, 26, 27, 29, 30, 31, 33, 34, 35, 36, 37) eingeschränkt wird, die insbesondere einer Stelle (15) des Speichermittels (16) zugeordnet sind.

16. Verfahren nach Patentanspruch 1, **dadurch gekennzeichnet, dass** bei der Schaffung dieser Markierung (39) diese letztere (39) einer Information (40) über die Seite (2) zugeordnet wird, in der sich der Textblock (4) befindet, der der Textdatei (20) entspricht, die der genannten Markierung (39) zugeordnet ist, und dass diese Information (40) einer Stelle (15) des Speichermittels (16) zugeordnet wird.

17. Verfahren nach irgendeinem der Patentansprüche 1 oder 16, **dadurch gekennzeichnet, dass** für mindestens eine Seite (2) des Schriftstückes (1) und je Seite eine markierte Datei geschaffen wird, in die alle Markierungen (39) eingetragen werden, die den Textblöcken (4) dieser Seite (2) entsprechen, und dass diese markierte Datei einer Stelle (15) des Speichermittels (16) zugeordnet wird.

18. Verfahren nach Patentanspruch 17, **dadurch gekennzeichnet, dass** der genannten markierten Datei eine sekundäre markierte Datei zugeordnet wird, in der der Inhalt (11) der Textblöcke (4), die einer Seite (2) entsprechen, derart erscheinen, dass sie mindestens teilweise geändert werden können, und dass diese sekundäre markierte Datei einer Stelle (15) des Speichermittels (16) zugeordnet wird.

19. Verfahren nach irgendeinem der Patentansprüche 15 bis 18, **dadurch gekennzeichnet, dass** mindestens teilweise der Zugang, je nach Fall zu den genannten Markierungen (39) und/oder den markierten Dateien und/oder dem Inhalt (11) der sekundären markierten Dateien eingeschränkt wird.

20. Verfahren nach irgendeinem der vorangehenden Patentansprüche, **dadurch gekennzeichnet, dass** die Kennung (7) jedes einem Bild entsprechenden Blockes (5), sowie die Informationen (9, 10) über die Form und den Inhalt dieses Blockes (5), dem Inhalt des genannten Bildblockes (5) zugeordnet wird.

21. Verfahren nach irgendeinem der vorangehenden Patentansprüche, **dadurch gekennzeichnet, dass** die Kennung (7) jedes einem Bild entsprechenden Blockes (5), sowie der Inhalt dieses Blockes (5) einer Stelle (15) des Speichermittels (16) zugeordnet wird.

22. Verfahren nach irgendeinem der vorangehenden Patentansprüche, **dadurch gekennzeichnet, dass** in der Speichereinrichtung (6) Informationen über die verschiedenen Farben festgestellt werden, die in den Blöcken (4, 5) erscheinen, dass eine Zusammensetzung aus Primärfarben jeder Information zugeordnet wird, die einer gegebenen Farbe entspricht, und dass diese Zusammensetzung und/oder die Information, die dieser gegebenen Farbe entspricht, einer Stelle (15) des Speichermittels (16) zugeordnet wird.

23. Verfahren nach Patentanspruch 22, **dadurch gekennzeichnet, dass** eine Tabelle (41) erstellt wird, in die in Abhängigkeit von jeder Information über eine gegebene Farbe die Zusammensetzung aus Primärfarben eingetragen wird, die dieser Information entspricht.

24. Verfahren nach irgendeinem der Patentansprüche 20 bis 23, **dadurch gekennzeichnet, dass** mindestens teilweise der Zugang, je nach Fall zum Inhalt des genannten Bildblockes (5) und/oder zur Zusammensetzung aus Primärfarben und/oder zur Information über eine gegebene Farbe, die in der Speichereinrichtung (6) festgestellt wird, eingeschränkt wird.

## Claims

1. Method for forming a database type storage means (16) containing data (9, 10) relating to the container and the contents of a group (3) of blocks (4, 5), each corresponding to a text or to an image, the appropriate arrangement of which makes it possible to define the composition of one or several pages (2) of a document (1) the layout of which is ensured by an appropriate processing means connected to a storage means (6) in which, block by block and for each block on the one hand, all of the data (9, 10) is stored relating to the container and the contents of the group of these blocks (4, 5) and on the other hand the contents (11) of the latter, each block (4, 5) being associated with an identifier (7) enabling its identification in said storing means (6),
the method consisting, by means of a software type processing means of
- collecting in said storing means (6) block after block and for each block data (9, 10) relating to the container and the contents (11) of each block (4, 5);
- collecting in said storing means (6) block after block and for each block data (4) corresponding to a text, the contents (11) of this text block (4) and creating for each of these text blocks (4) a text file (20) in which the contents (11) of this text block (4) is recorded,
said method also consisting of:
- associating the identifier (7) of each block (4, 5) as well as data (9, 10) relating to the container and the contents (11) of each of these blocks (4, 5) with a location (15) in the storage means (16);
- associating the identifier (7) of each block (4) corresponding to a text as well as, if necessary, data (9, 10) relating to the container and to the contents (11) of this text block (4), and/or unitary data (19) relating to this text block (4), to the text file (20) which includes the contents (11) of this text block (4) in the form of one or more block-type patterns (21) the first part (22) of which is formed by at least one base code (24) and/or a series (26) of base codes (24) and the second part (23) of which is formed by at least one alphanumeric characteristic (25);
- associating the identifier (7) of each block (4) corresponding to text as well as each text file (20) corresponding to a text block (4) with a location (15) in the storage means (16);
- creating a table (14) which records block after block and for each block and as the function of the identifier (7) of the latter, as necessary, data (9, 10) relating to the container and contents (11) of each block (4, 5) and/or unitary data (19), by type (17) of unitary data (19);
- creating, during the creation of a text file (20) corresponding to a text block (4), a marker (39) specific to this text file (20) and associated with the latter (20), and associating said marker (39) with a location (15) in the storage means (16);
the method being **characterised in that** it also consists of
- creating from each text file (20) at least one finalised text file for which the first part (22) of the block type pattern or patterns (21) is defined, as necessary, by an interpreted code (29), an additional interpreted code (31) or a specific interpreted code (35), the block type patterns (21) comprising, associated with said interpreted codes (29, 31, 35), the alphanumeric character or characters (25) and
- associating the text file (20) on the one hand and an additional text file (28) of which the first parts (22) of the block type patterns (21) correspond to the interpreted codes (29), an additional text file (32) of which the first parts (22) of the block type patterns (21) correspond to additional interpreted codes (31) and/or an additional text file (38) of which the first parts of the block type patterns (21) correspond to specific interpreted codes (35) on the other hand to a location (15) in the database (16).

2. Method according to claim 1, **characterized in that** in said storage means (6) different types (17) of unitary data (19) are collected corresponding to data (9, 10) relating to the container and the contents of each block (4, 5), **in that** the identifier (7) of each block (4, 5) as well as each piece of unitary data (19) corresponding to each type (17) of data (9, 10) relating to this block (4, 5) are associated with a location (15) in the storage means (16).

3. Method according to any one of the preceding claims, **characterized in that** access is limited at least partly, as necessary, either to data (9, 10) relating to the container and the contents (11) of each block (4, 5) or to at least part of the unitary data (19).

4. Method according to any one of the preceding claims, **characterized in that** the text file (20) designed for containing the contents (II) of this text block (4) is generated, as necessary, during the recording into the table (14) of data (9, 10, 19) relating to the container and the contents (11) of a block (4) corresponding to a text, or during the association of this data (9, 10, 19) with a location (15) in the storage means (16).

5. Method according to any one of the preceding claims, **characterized in that** when the contents (11) of a block (4) corresponding to a text are recorded in a text file (20), in this text file (20) at least one block-type pattern (21) defined by two parts (22, 23) is formed, the first part (22) of which is formed by at least one basic code (24), while the second part (23) is formed by at least one alphanumeric character (25), on the one hand, associated with basic codes (24) and, on the other hand, corresponding to the text associated with said text block (4) and appearing at the level of the page (2) of the document (1).

6. Method according to claim 5, **characterized in that** the alphanumeric character or characters (25) corresponding to the second part (23) of the block-type pattern (21), even the basic code or codes (24) of the first part (22) of the block-type pattern (21), are associated with a location (15) in said storage means (16).

7. Method according to any of claims 5 or 6, **characterized in that** when the first part (22) of a block-type pattern (21) is formed by a series (26) of basic codes (24), an additional basic code (27) corresponding to this series (26) of basic codes (24) is defined and this series (26) of basic codes (24) and/or this additional basic code (27) are associated with a location (15) in the storage means (16).

8. Method according to claim 7, **characterized in that** from the text file (20) a complementary text file (28) is created in which the series (26) of basic codes (24) corresponding to the first part (22) of the block-type pattern or patterns (21) is replaced by the corresponding additional basic code (27) and the thus created complementary text file (28) is associated with a location (15) in the storage means (16).

9. Method according to any one of claims 5 or 6, **characterized in that** the basic code or codes (24) forming the first part (22) of the block-type pattern or patterns (21) of these text files (20) are interpreted for each text file (20), and the interpreted code or codes (29) as well as the alphanumeric characters (25) forming the second part (23) of the block-type pattern or patterns (21) of these text files (20) are associated with a location (15) in the storage means (16).

10. Method according to claim 9, **characterized in that** when the first part (22) of a block type pattern (21) is formed by a series (26) of basic codes (24), these basic codes (24) are interpreted, a series (30) of interpreted codes (29) is formed and an additional interpreted code (31) corresponding to this series (30) of interpreted codes (29) is defined and/or the series (30) of interpreted codes (29) and/or said additional interpreted code (31) are associated with a location (15) in the storage means (16).

11. Method according to any one of the preceding claims, **characterized in that** the contents (11) of a block (4) corresponding to a text are recorded in a text file (20), at least one specific basic code (33) defined by a series (34) of basic codes (24) and corresponding, for example, to a specific presentation style of at least part of the text corresponding to said block (4) is integrated into this text file (20), said specific basic code (33) is associated with the first part (22) of at least one block type pattern (21) that said text file (20) includes.

12. Method according to claim 11, **characterized in that** said specific basic code (33) and/or the series (34) of basic codes (24) corresponding to this specific basic code (33) are associated with a location (15) in the storage means (16),

13. Method according to any of claims 11 or 12, **characterized in that** the basic codes (24) forming the series (34) of basic codes (24) defining the specific basic code (33) are interpreted, a specific interpreted code (35) formed by the series (36) of interpreted codes (37) is defined and this series (36) of interpreted codes (37) and/or said specific interpreted code (35) are associated with a location (15) in the storage means (16).

14. Method according to claim 13, **characterized in that** from said text file (20) a further text file (38) is created in which the specific basic code (33) is replaced by the corresponding specific interpreted code (35) and this thus created further text file (38) is associated with a location (15) in the storage means (16).

15. Method according to any one of claims 5 to 14, **characterized in that** access is limited, at least partly, as necessary to at least part of said text files (20, 28, 32, 38) and/or to the alphanumeric character(s) (25) and/or to at least part of the codes (24, 26, 27, 29, 30, 31, 33, 34, 35, 36, 37), namely those associated with a location (15) in the storage means (16).

16. Method according to claim 1, **characterized in that**, when creating this marker (39), the latter (39) is associated with a piece of data (40) relating to the page (2) in which the text block (4) corresponding to the text file (20) associated with said marker (39) appears, and this piece of data (40) is associated with a location (15) in the storage means (16).

17. Method according to any of claims 1 or 16, **characterized in that** for at least one page (2) of the document (1) and for every page a tagged file is created in which all of the markers (39) corresponding to the text blocks (4) of this page (2) are recorded and said tagged file is associated with a location (15) in the storage means (16).

18. Method according to claim 17, **characterized in that** a secondary tagged file is associated with said tagged file, where the contents (11) of the text blocks (4) corresponding to a page (2) appear, which are capable of being at least partially changed, and this secondary tagged file is associated with a location (15) in the storage means (16).

19. Method according to any one of claims 15 to 18, **characterized in that** access is limited, at least partly, as necessary to said markers (39) and/or to tagged files and/or to the contents (11) of the secondary tagged files.

20. Method according to any one of the preceding claims, **characterized in that** the identifier (7) of each block (5) corresponding to an image as well as data (9, 10) relating to the container and contents of this block (5) are associated with the contents of said image block (5).

21. Method according to any one of the preceding claims, **characterized in that** the identifier (7) of each block (5) corresponding to an image as well as the contents of this block (5) are associated with a location (15) in the storage means (16).

22. Method according to any one of the preceding claims, **characterized in that** data relating to the different colours appearing in the blocks (4, 5) are detected at the level of the storage means (6), a composition of primary colours is associated with each piece of data corresponding to a given colour, and this composition and/or the piece of data relating to this given colour are associated with a location (15) in the storage means (16).

23. Method according to claim 22, **characterized in that** a table (41) is created in which the composition of primary colours corresponding to said data is recorded according to each piece of data relating to a given colour.

24. Method according to any one of claims 20 to 23, **characterized in that** access is limited, at least partly, as necessary to the contents of said image block (5) and/or to the composition of primary colours and/or to the data corresponding to a given colour detected at the storage means (6).
